# EUROPÄISCHE PATENTSCHRIFT

(11) **EP 0 533 651 B1**
(45) Veröffentlichungstag und Bekanntmachung des Hinweises auf die Patenterteilung: **03.04.1996**
(21) Anmeldenummer: 92890196.6
(22) Anmeldetag: 18.09.1992
(51) Int. Cl.: G01N 21/59, G01N 21/27

(54) **Messeinrichtung und Messverfahren zur Bestimmung von Eigenschaften einer Probe**
Measurement arrangement and method for determining the properties of a sample
Dispositif et procédé de mesure pour la détermination des propriétés d'un échantillon

(30) Priorität: 20.09.1991 AT 1898/91
(43) Veröffentlichungstag der Anmeldung: 24.03.1993
(73) Patentinhaber: AVL Gesellschaft für Verbrennungskraftmaschinen und Messtechnik mbH.Prof.Dr.Dr.h.c. Hans List, A-8020 Graz (AT)
(72) Erfinder: Ponticelli, Martin, Dipl.-Ing., A-8010 Graz (AT); Simbürger, Karl, A-8403 Lebring (AT)
(74) Vertreter: Klein, Adam, Dipl.Ing.

(56) Entgegenhaltungen:
- WO-A-90/07160
- US-A- 3 850 529
- US-A- 4 231 663

## Beschreibung

Die Erfindung betrifft eine Meßeinrichtung, mit einer elektromagnetische Strahlung, insbesonders sichtbares Licht, aussendenden Beleuchtungsanordnung, einem von dieser beleuchteten Probenbereich und einer Meßanordnung, welche die von einer im Probenbereich befindlichen Probe beeinflußte Strahlung detektiert und in ein Meßsignal umsetzt, sowie mit einer Kalibriereinrichtung zur kontrollierten Absenkung der Intensität der zum Probenbereich gelangenden Strahlung während einer Linearitätsprüfung der Einrichtung.

Weiters betrifft die Erfindung auch ein Meßverfahren zur Bestimmung von Eigenschaften einer Probe über den Nachweis der Beeinflussung von elektromagnetischer Strahlung, insbesonders sichtbarem Licht, durch die Probe, wobei zur Linearitätsüberprüfung eine kontrollierte Absenkung der Intensität der zur Probe gelangenden Strahlung vorgenommen wird.

Einrichtungen und Verfahren der genannten Art sind in verschiedensten Zusammenhängen und Ausgestaltungen bekannt und ermöglichen beispielsweise beim sogenannten opazimetrischen Meßverfahren in der Abgasmeßtechnik Messungen an und Aussagen über das Abgas von Verbrennungsmotoren. Derartige Meßgeräte bzw. -verfahren nach dem Opazimeterprinzip werten die Abschwächung eines von einer Beleuchtungsanordnung generierten und von einem geeigneten Fotoelement oder dergleichen detektierten Strahlungsstromes (insbesonders Lichtstromes im sichtbaren Spektralbereich) durch ein in einem Probengasrohr vorhandenes Probengas mittels einer Auswerteelektronik aus. Die Abschwächung bzw. Extinktion des Lichtes kommt dabei durch verschiedene physikalische Effekte, insbesondere Absorption und Streuung, zustande.

Andere Einrichtungen bzw. Verfahren der genannten Art können beispielsweise auch im Reflexions- bzw. Auflichtverfahren arbeiten, wobei etwa der Schwärzungsgrad eines Filterpapiers durch Messung des Reflexionsgrades bestimmt und zur Aussage über die Partikelbeladung von Abgas oder dergleichen verwendet wird.

Als Beleuchtungsquelle wird in den angesprochenen Fällen heutzutage bei Verwendung von sichtbarem Licht vorzugsweise eine Halogenlampe mit Abstrahlung von inkohärentem Licht über einen breiten Teil des sichtbaren Spektralbereichs eingesetzt. Daneben sind aber auch andere Beleuchtungsquellen, insbesonders Leuchtdioden mit Intensitätsmaxima im Bereich grünen Lichtes, in Verwendung.

Bei der Auswertung der Messung beispielsweise nach dem Kurzschlußverfahren ist der im Fotoelement der Meßanordnung detektierte Meßignal-Pegel dem auftreffenden Lichtstrom (entsprechend der Beleuchtungsintensität) proportional, was bedeutet, daß die Meßeinrichtung prinzipiell linear arbeitet.

Bei der praktischen Realisierung sind aber neben einer Verschiebung des Nullpunktes bei ausgeschalteter Beleuchtungsanordnung, insbesonders durch Dunkelströme, Fremdlichteintritt und Offsetfehler der Auswerteelektronik, und neben einer Empfindlichkeitsänderung der Meßanordnung, ausgelöst insbesonders durch Alterung der Beleuchtungsanordnung und des Fotoelements bzw. der entsprechenden Meßanordnung, Verschmutzung des Strahlungsweges und Drifterscheinungen der Auswerteelektronik, auch Linearitätsfehler der Meßanordnung, insbesonders Sättigungserscheinungen des Fotoelementes und Fehler der Auswerteelektronik, feststellbar.

Gängige Ausführungen von Meßeinrichtungen der genannten Art beinhalten daher neben der Möglichkeit, den Nullpunkt bei abgeschalteter Beleuchtungsanordnung und den Maximalwert mit sauberer Probe zu kalibrieren, auch eine Kalibriereinrichtung, um die Linearität der Meßeinrichtung in einzelnen Meßbereichen, zumeist einem einzelnen Meßpunkt in der Meßbereichsmitte, mit einfachen Mitteln zu überprüfen. Stand der Technik für die Durchführung dieser einfachen Linearitätsüberprüfung ist eine in den Beleuchtungspfad einschiebbare Filterscheibe mit definierter Dämpfung, bzw. eine einschiebbare mechanische Blende mit definierter Öffnung. Diese Filterscheibe bzw. Blende kann manuell oder für einen automatisierten Betrieb der Meßeinrichtung mit Hilfe eines Stellgliedes, etwa eines Hubmagneten oder eines Elektromotors, eingeschoben werden. In beiden Fällen wird ein möglichst genau festgelegter Teil des fließenden Beleuchtungsstromes abgeschattet und das von der Meßeinrichtung ermittelte Meßresultat mit dem definierten Sollwert verglichen.

Der Nachteil von Linearitätsprüfungen der genannten Art mit Blenden ist neben dem nicht unbeträchtlichen mechanischen Aufwand bei automatisierter Durchführung das Eingehen der geometrischen Verhältnisse in das Meßresultat. So erfolgt etwa die Ausbreitung des Lichtstroms beispielsweise durch das Probengasrohr eines Opazimeters gewöhnlich nicht in Form paralleler Lichtstrahlen. Dadurch wird der Aufwand in vertretbaren Bereichen gehalten, insbesondere werden kostspielige Linsen- oder Spiegelsysteme vermieden. Änderungen im Lichtstrom, wie sie insbesonders durch Toleranzen im Bereich der Lampenhalterung, des Lichtkopfes, des Meßkopfes, des Probengasrohres und der Blende auftreten, können dadurch eine direkte Auswirkung auf das Meßresultat bei der Linearitätsüberprüfung mit mechanischer Blende zeigen. Der durch die genannten Einflüsse bewirkte Meßfehler liegt bei den bekannten gängigen Meßeinrichtungen und Verfahren der genannten Art im Prozentbereich und damit eine bis mehrere Größenordnungen über den typischen Linearitätsfehlern selbst.

Filterscheiben mit definierter Dämpfung der Beleuchtung, die den Nachteil der unmittelbaren Abhängigkeit von der geometrischen Anordnung nicht besitzen, und die deshalb für Kalibrierungen unter Laborbedingungen eingesetzt werden, sind nur mit erheblichen Aufwand für eine automatisierte Linearitätsüberprüfung einsetzbar. Insbesonders muß eine Verfälschung des Dämpfungsgrades durch eine allfällige Verschmutzung unter erschwerten Umgebungsverhältnissen, wie sie insbesonders für Werkstattmeßgeräte zutreffen, verhindert werden.

Aufgabe der vorliegenden Erfindung ist es, eine Meßeinrichtung bzw. ein Meßverfahren der eingangs genannten Art so zu verbessern, daß die genannten Nachteile der bekannten Einrichtungen und Verfahren nicht auftreten und daß insbesonders mit einfachen Mitteln genaue und aussagekräftige Linearitätsüberprüfungen durchgeführt werden können.

Dies wird gemäß der vorliegenden Erfindung bei einer Meßeinrichtung der eingangs genannten Art dadurch erreicht, daß die Beleuchtungsanordnung mehrere unabhängige Beleuchtungsquellen aufweist, welche über separate Zuleitungen und Schaltelemente von der Kalibriereinrichtung selektiv zur Linearitätsüberprüfung der Einrichtung einzeln oder gemeinsam betreibbar sind. Die entsprechende Ausgestaltung des erfindungsgemäßen Meßverfahrens ist dadurch gekennzeichnet, daß die Intensitätsbeiträge mehrerer, selektiv zu betreibender Strahlungsquellen einzeln bestimmt, addiert und der Gesamtintensität bei Betrieb aller Strahlungsquellen gegenübergestellt werden.

Die Erfindung ermöglicht also eine Linearitätsüberprüfung mittels mehrerer, selektiv zu schaltender Licht- bzw. Beleuchtungsquellen, welche zeitlich hintereinander einzeln bzw. auch in beliebigen Gruppen betrieben werden, worauf die zugehörigen Fotoströme erfaßbar sind.

Abschließend werden alle Beleuchtungsquellen gemeinsam eingeschaltet und der Summenfotostrom ermittelt. Diese Summenkonfiguration wird üblicherweise auch danach bei der eigentlichen Messung benutzt. Da sich inkohärentes Licht mehrerer Quellen bekanntlich interferenzlos überlagern läßt, muß unter der Voraussetzung einer linearen Meßanordnung folglich die arithmetische Summe der von der Meßanordnung aufgenommenen Fotoströme der einzeln oder in Gruppen betriebenen Quellen dem Summenfotostrom bei gemeinsamem Betrieb aller Lichtquellen entsprechen. Dies gilt auch für beliebige Einzelkombinationen mehrerer Beleuchtungsquellen. Dabei haben allfällige gegenseitige Abschattungen bzw. unterschiedliche geometrische Bedingungen der Einzel-Beleuchtungsquellen keine negativen Auswirkungen, da sich die Verhältnisse im Einzelbetrieb gegenüber dem Mischbetrieb nicht ändern, womit die einzelnen Quellen durchaus auch verschiedene Beiträge zum Gesamtfotostrom liefern können.

Die die Beleuchtungsanordnung versorgende Spannungsquelle kann vorzugsweise - wie auch bei herkömmlichen Anordnungen mit nur einer Lichtquelle - geregelt ausgeführt werden, um die zeitliche Drift der Meßwerte gering zu halten und auch um eine Änderung der Vorsorgungsspannung durch die unterschiedliche Belastung während der Linearitätsüberprüfung zu vermeiden.

Mit der Einrichtung bzw. dem Verfahren nach der Erfindung ergibt sich - neben der schon angesprochenen höheren Genauigkeit der Linearitätsüberprüfung und den bei einer automatisierten Linearitätsprüfung deutlich reduzierten Kosten der Einrichtung - der Vorteil einer erhöhten Zuverlässigkeit und Lebensdauer, insbesonders bei Verwendung von Halbleiterschaltern oder dergleichen. Daneben ist auch ein Notbetrieb der Einrichtung bei einem Teilausfall von einzelnen Beleuchtungsquellen möglich und - insbesonders bei Einsatz von Glühlampen im weitesten Sinne als Beleuchtungsquelle, durch Vergleich der einzelnen Teillichtströme auch das Feststellen einer Wartungsnotwendigkeit denkbar.

In bevorzugter Ausgestaltung der Meßeinrichtung bzw. des Meßverfahrens nach der Erfindung ist vorgesehen, daß die Beleuchtungsanordnung zwei im wesentlichen gleiche, neben- bzw. hintereinander angeordnete Beleuchtungsquellen aufweist, was eine einfache Ausgestaltung der Einrichtung mit nur wenigen zusätzlichen Einzelteilen ermöglicht und für die meisten Meßzwecke ausreichend ist.

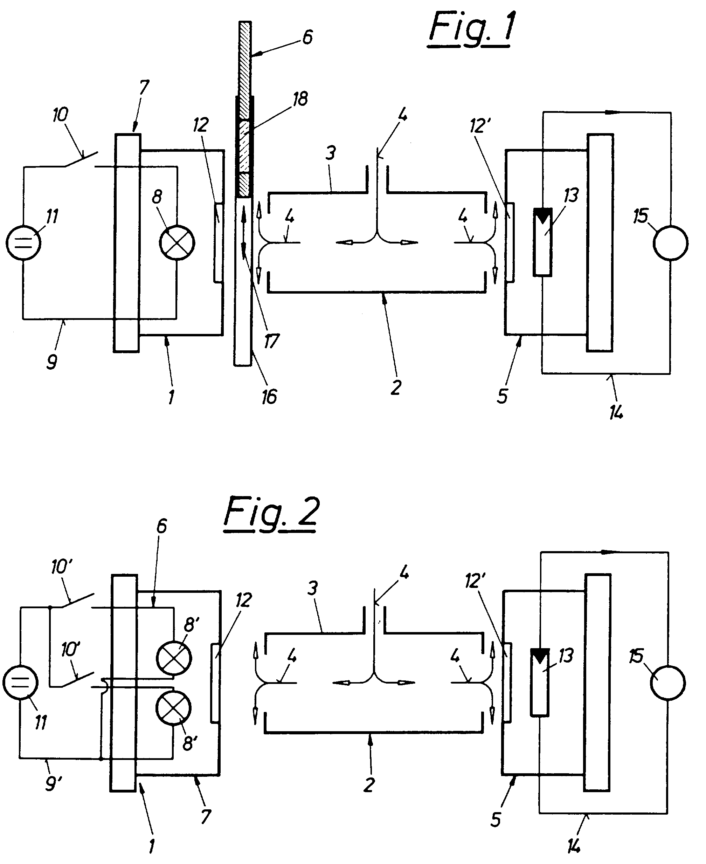

Die Erfindung wird im folgenden noch anhand der in der Zeichnung dargestellten Ausführungsbeispiele näher erläutert. Fig. 1 zeigt dabei eine opazimetrische Meßeinrichtung nach dem Stande der Technik und Fig. 2 eine entsprechende Meßeinrichtung nach der vorliegenden Erfindung.

Die bekannte Meßeinrichtung nach Fig. 1 besteht im wesentlichen aus einer Beleuchtungsanordnung 1, einem Probenbereich 2 - hier in Form eines Probengasrohres 3, welches entlang der Pfeile 4 von Probengas durchströmt wird - und einer Meßanordnung 5 sowie einer Kalibriereinrichtung 6.

Die Beleuchtungsanordnung 1 weist in einem Lichtkopf 7 eine einzelne Beleuchtungsquelle 8, gebildet beispielsweise durch eine Halogenlampe oder dergleichen, auf, welche über eine Zuleitung 9 mit einem Schaltelement 10 und einer Spannungsversorgung 11 verbunden ist. Austrittsseitig ist der Lichtkopf 7 mit einer Streuscheibe 12 zur Vergleichmäßigung des Lichtstromes versehen.

Dem Lichtkopf 7 bezüglich des Probenbereiches 2 gegenüberliegend ist die Meßanordnung 5 dem Lichtkopf ähnlich aufgebaut. Eingangsseitig sind Filterscheiben 12′ angeordnet hinter denen ein Fotoelement 13 liegt, welches über Leitungen 14 mit einer Auswerteeinrichtung 15, beispielsweise in der einfachsten Form ein Amperemeter, verbunden ist.

Zwischen der Austritts-Streuscheibe 12 des Lichtkopfes 7 und dem Probengasrohr 3 ist die Kalibriereinrichtung 6 in Form einer in einer Führung 16 entlang des Doppelpfeiles 17 verschieblichen Filterscheibe 18 angeordnet, welche eine definierte Dämpfung aufweist, womit - bei vor die Streuscheibe 12 geschobener Filterscheibe 18 - ein genau festgelegter Teil des ansonsten durch das Probengasrohr 3 fließenden Lichtstromes abgeschattet wird und das von der Meßeinrichtung insgesamt ermittelte Resultat mit dem definierten Sollwert verglichen werden kann.

Bei der Darstellung der erfindungsgemäßen Ausführung nach Fig. 2 entsprechen der Probenbereich 2 und die Meßanordnung 5 praktisch unverändert der Meßeinrichtung nach Fig. 1 - gleiche Teile sind hier (und auch beim abweichend ausgeführten Lichtkopf 7) mit gleichen Bezugszeichen versehen; auch die Beschreibung der grundsätzlichen Funktion entspricht im wesentlichen der Einrichtung nach Fig. 1, sodaß zur Vermeidung von Wiederholungen hier diesbezüglich nur auf die obenstehenden Ausführungen verwiesen wird.

Abweichend ist die erfindungsgemäße Ausbildung nach Fig. 2 im wesentlichen nur im Hinblick auf die Kalibriereinrichtung 6, bzw. die entsprechend geänderte Beleuchtungsanordnung 1, die hier nun zwei unabhängige Beleuchtungsquellen 8′ aufweist, welche über separate Zuleitungen 9′ und Schaltelemente 10′ von der Kalibriereinrichtung 6 selektiv zur Linearitätsüberprüfung der Einrichtung einzeln oder gemeinsam betreibbar sind. Damit können die Intensitätsbeiträge der beiden Beleuchtungsquellen 8′ mittels der Meßanordnung 5 einzeln bestimmt, in der Auswerteeinrichtung 15 addiert und der Gesamtintensität bei Betrieb beider Strahlungsquellen 8′ gegenübergestellt werden. Dies ermöglicht einfache und genaue Linearitätsüberprüfungen, sowie im Bedarfsfall auch das Betreiben der gesamten Einrichtung mit nur einer der beiden Beleuchtungsquellen 8′.

Abgesehen von der konkret dargestellten Ausbildung der Beleuchtungsanordnung 1 bzw. des Lichtkopfes 7 in Fig. 2 könnten auch mehrere einzelne bzw. Gruppen von Beleuchtungsquellen 8′ vorgesehen werden, die auch andere gegenseitige Lagen zueinander aufweisen könnten, da auch eine gegenseitige Abschattung der einzelnen Beleuchtungsquellen keine negativen Auswirkungen bei der Linearitätsüberprüfung zeigt.

## Patentansprüche

1. Meßeinrichtung, mit einer elektromagnetische Strahlung, insbesonders sichtbares Licht, aussendenden Beleuchtungsanordnung, einem von dieser beleuchteten Probenbereich und einer Meßanordnung, welche die von einer im Probenbereich befindlichen Probe beeinflußte Strahlung detektiert und in ein Meßsignal umsetzt, sowie mit einer Kalibriereinrichtung zur kontrollierten Absenkung der Intensität der zum Probenbereich gelangenden Strahlung während einer Linearitätsüberprüfung der Einrichtung, **dadurch gekennzeichnet,** daß die Beleuchtungsanordung (1) mehrere unabhängige Beleuchtungsquellen (8′) aufweist, welche über separate Zuleitungen (9′) und Schaltelemente (10′) von der Kalibriereinrichtung (6) selektiv zur Linearitätsüberprüfung der Einrichtung einzeln oder gemeinsam betreibbar sind.

2. Meßeinrichtung nach Anspruch 1, dadurch gekennzeichnet, daß die Beleuchtungsanordnung (1) zwei im wesentlichen gleiche, neben- bzw. hintereinander angeordnete Beleuchtungsquellen (8′) aufweist.

3. Meßverfahren zur Bestimmung von Eigenschaften einer Probe über den Nachweis der Beeinflussung von elektromagnetischer Strahlung, insbesonders sichtbarem Licht, durch die Probe, wobei zur Linearitätsüberprüfung eine kontrollierte Absenkung der Intensität der zur Probe gelangenden Strahlung vorgenommen wird, **dadurch gekennzeichnet,** daß die Intensitätsbeiträge mehrerer, selektiv zu betreibender Strahlungsquellen einzeln bestimmt, addiert und der Gesamtintensität bei Betrieb aller Strahlungsquellen gegenübergestellt werden.

4. Meßverfahren nach Anspruch 3, dadurch gekennzeichnet, daß zwei einzelne Strahlungsquellen verwendet werden.

## Claims

1. Measuring device with an illuminating arrangement producing electromagnetic radiation, in particular visible light, a sample region illuminated by it and a measuring arrangement which detects the radiation influenced by a sample present in the sample region and converts it into a measured signal, as well as with a calibrating device for the monitored reduction of the intensity of the radiation reaching the sample region during a check on the linearity of the device, characterised in that the illuminating arrangement (1) comprises a number of independent sources of illumination (8') which can be operated selectively individually or in common for checking the linearity of the device, through separate leads (9') and switching elements (10') of the calibrating device (6).

2. Measuring device according to claim 1, characterised in that the illuminating arrangement (1) has two substantially equal sources of illumination (8') arranged side by side or one behind the other.

3. Method of measurement for determining characteristics of a sample through an indication of the effect of electromagnetic radiation, in particular visible light, by the sample, in which for checking the linearity a monitored reduction of the intensity of the radiation which reaches the sample is undertaken, characterised in that the intensity levels of a number of sources of radiation which are operable selectively are determined individually, added and set against the total intensity on operation of all the sources.

4. Method of measurement according to claim 3, characterised in that two individual sources are used.

## Revendications

1. Dispositif de mesure, comportant un dispositif d'éclairage émettant un rayonnement électromagnétique, notamment de la lumière visible, une zone d'essai éclairée par celui-ci et un appareil de mesure qui détecte le rayonnement modifié par un échantillon se trouvant dans la zone d'essai et le transforme en un signal de mesure, ainsi qu'un appareil d'étalonnage pour réduire de manière contrôlée l'intensité du rayonnement atteignant la zone d'essai pendant un contrôle de linéarité du dispositif, caractérisé en ce que le dispositif d'éclairage (1) comprend plusieurs sources d'éclairage (8') indépendantes, qui peuvent être mises en action par l'appareil de calibrage, séparément ou ensemble de manière sélective, pour l'essai de linéarité du dispositif, au moyen de conducteurs (9') et d'interrupteurs (10') séparés.

2. Dispositif de mesure selon la revendication 1, caractérisé en ce que le dispositif d'éclairage (1) comprend deux sources d'éclairage (8') sensiblement identiques disposées l'une derrière l'autre ou l'une à côté de l'autre.

3. Procédé de mesure pour la détermination des propriétés d'un échantillon à partir de la détection de la modification du rayonnement électromagnétique, notamment de la lumière visible, par l'échantillon, dans lequel on effectue pour un contrôle de linéarité une réduction contrôlée de l'intensité du rayonnement atteignant l'échantillon, caractérisé en ce que l'on détermine séparément les valeurs d'intensité de plusieurs sources d'éclairage mises en action de manière sélective, en ce qu'on les additionne et en ce qu'on compare la somme à l'intensité globale lors de la mise en action de toutes les sources d'éclairage.

4. Procédé de mesure selon la revendication 3, caractérisé en ce que l'on utilise deux sources d'éclairage distinctes.
